# FASCICULE DE BREVET EUROPEEN

(11) **EP 0 660 906 B1**
(45) Date de publication et mention de la délivrance du brevet: **12.08.1998**
(21) Numéro de dépôt: 94918822.1
(22) Date de dépôt: 27.05.1994
(51) Int. Cl.: F16K 47/02

(54) **DISPOSITIF POUR AMORTIR LES VIBRATIONS ET LE BRUIT, POUR DES INSTALLATIONS HYDRAULIQUES**
SCHWINGUNGS- UND GERÄUSCHABSORBIERENDE VORRICHTUNG FÜR EIN HYDRAULISCHES SYSTEM
VIBRATION AND NOISE ABSORBING DEVICE FOR HYDRAULIC SYSTEMS

(30) Priorité: 22.06.1993 IT TO930449
(43) Date de publication de la demande: 05.07.1995
(73) Titulaire: GEVIPI A.G., FL-9490 Vaduz (LI)
(72) Inventeur: KNAPP, Alfons, D-7950 Biberach (DE)
(74) Mandataire: Patrito, Pier Franco, Dr. Ing.
(86) Numéro de dépôt international: EP9401762
(87) Numéro de publication internationale: WO9500790

(56) Documents cités:
- EP-A- 0 249 067
- EP-A- 0 373 155
- BE-A- 563 715
- DE-A- 2 115 826
- DE-A- 2 421 372
- DE-A- 3 000 990
- DE-A- 3 842 298
- FR-A- 1 149 443
- FR-A- 2 480 397
- US-A- 2 051 019
- US-A- 4 759 387

## Description

La présente invention a pour objet un dispositif destiné à amortir les vibrations et le bruit produits dans une installation hydraulique.

Les appareils hydrauliques, notamment les robinets mélangeurs pour eau chaude et froide, donnent lieu dans certaines conditions de fonctionnement à des vibrations, qui sont dues surtout à des phénomènes de cavitation ainsi qu'aux brusques déviations imposées aux flux d'eau, et ces vibrations sont transmises par l'eau, à travers les tubations d'alimentation, aux conduites principales de l'installation, et enfin elles sont transmises à l'ambient sous forme de bruits. Les vibrations sont nuisibles, et les bruits doivent être limités au dessous de certaines valeurs maximales qui, parfois, sont imposées par des règlements.

Si l'on n'adopte pas des dispositions particulières, la transmission de ces vibrations a lieu sans aucune atténuation appréciable, dû à l'incompressibilité pratique de l'eau. En considérant cela, le moyen employé d'habitude pour limiter le bruit d'une installation consiste à compenser l'incompressibilité de l'eau en incluant le long du passage de l'eau des régions élastiquement souples constituées par des poches d'air renfermées dans des enveloppes de matériau souple, d'habituae élastomérique. Par exemple, suivant le brevet italien No. 1.141.569 ces poches d'air sont définies par des enveloppes annulaires ayant une section en C, disposées dans les passages parcourus par l'eau entre les arrivées au corps d'un robinet et une plaque fixé contrôlant le débit. Suivant le brevet allemand No. 30 00 990, des poches d'air sont définies par des enveloppes tubulaires avec des ailes, dont la forme est plus compliquée que celle des enveloppes qui précédent, elles aussi disposées dans les passages parcourus par l'eau entre les arrivées au corps d'un robinet et une plaque fixe contrôlant le débit. Encore, suivant le brevet allemand No. 24 21 372, des poches d'air sont définies par des enveloppes tubulaires disposées dans des canaux formés pour l'arrivée de l'eau dans le corps d'un robinet. Aussi d'autres dispositions sont connues dans ce but, et elles peuvent être prévues soit dans le corps d'un robinet, soit dans les raccords en S employés d'habitude pour la connection d'un robinet aux prises d'eau insérées dans un mur. C'est une caractéristique commune à toutes ces dispositions que les enveloppes renfermant les poches d'air sont disposées sur le passage du flux d'eau dont les vibrations doivent être amorties, et de ce fait elles sont directement léchées par le flux d'eau. En effet, jusqu'à présent on a considéré que le contact directe entre ces enveloppes et le flux d'eau à amortir était indispensable.

Dans ces dispositifs, l'action d'amortissement est due à la souplesse élastique de l'air renfermé dans les poches, lequel est séparé de l'eau par les enveloppes de matériau élastomérique qui renferment les poches d'air. La présence de ces enveloppes entrave l'action des poches d'air, toutefois elle est nécessaire pour éviter que l'air des poches soit emporté, dans le temps, par le flux d'eau. Pour atteindre une action élevée d'amortissement en réduisant l'obstacle représenté par les enveloppes, il est nécessaire que celles-ci montrent une grande souplesse, donc qu'elles soient minces. Mais si une enveloppe disposée de la façon connue serait très mince, le flux d'eau qui la lèche exercerait sur elle des actions dynamiques en induisant des vibrations, qui sont nuisibles, et à la limite pourrait endommager l'enveloppe. Il n'est donc pas possible de réduire sous certaines limites l'épaisseur, et donc la rigidité, de ces enveloppes, et cela pose une grave limite à l'efficacité de ce moyen d'amortissement. De plus, dans certains cas l'installation d'une enveloppe tubulaire renfermant une poche d'air, disposée sur la trajectoire du flux de l'eau, rencontre des graves difficultés dû à la faute de place; c'est le cas, par exemple, des types de robinets qui sont alimentés à travers des tuyaux rigides ou flexibles. Pour insérer une enveloppe d'amortissement du type connu dans ce genre de robinets, il faudrait augmenter d'une façon considérable et lourd la longueur du corps du robinet.

Suivant les documents US-A-4 759 387 et EP-A-0.249.067, un dispositif destiné à amortir des chocs de pression dans une installation hydraulique comprend une enveloppe de matériau souple qui renferme une poche d'air et qui est disposée en contact avec l'eau de l'installation hydraulique, ladite enveloppe étant disposée dans un espace dérivé communiquant avec les espaces parcourus par le flux d'eau sans être parcouru lui-même par ce flux.

Ce type de dispositif est destiné à supprimer les chocs de pression dus à la clôture rapide d'une soupape, et donc des coups de pression isolés, intenses et impulsifs. A' cet effet est nécessaire une poche d'air de capacité considérable, et il en résulte un dispositif de grosse taille. Un dispositif de ces dimensions ne pourrait pas amortir des vibrations et des bruits, dont l'intensité est réduite et la fréquence d'oscillation est relativement élevée et qui donc ne peuvent pas être absorbés par des poches d'air de grande capacité.

Du fait que la présente invention se rapporte exclusivement à l'amortissement des vibrations et du bruit, et nullement à la suppression des chocs, l'exigeance concernant les dimensions des poches d'air est opposée de celle suivant le document EP-A-0.249.067.

Le but principal de la présente invention est de rationaliser l'emploi des poches d'air renfermées dans des enveloppes de matériau souple, exclusivement à l'effet d'amortir les vibrations et le bruit d'une installation hydraulique. Un but de l'invention est de permettre d'atteindre une action d'amortissement plus efficace de celle qu'on obtient d'habitude. Un autre but de l'invention est de rendre possible l'installation d'une enveloppe renfermant une poche d'air même où la place à disposition est particulièrement limitée, et donc, en particulier, en connexion avec une cartouche pour robinet. Encore un but de l'invention est de rendre possibles des dispositions des enveloppes renfermant des poches d'air, dans lesquelles les enveloppes ne peuvent pas être mises en vibration ni être endommagées par le flux d'eau sur lequel s'exerce l'action d'amortissement.

Le dispositif suivant l'invention peut être réalisé en des formes différentes.

Conformément à un premier ensemble de solutions suivant l'invention, un dispositif destiné à amortir les vibrations et le bruit produits dans une installation hydraulique, du type comprenant au moins une enveloppe de matériau souple qui renferme une poche d'air et qui est disposée en contact avec l'eau de l'installation hydraulique, dans lequel ladite enveloppe est disposée dans un espace dérivé, lequel communique avec les espaces parcourus par le flux d'eau, mais n'est pas parcouru lui-même en mesure appréciable par ce flux, et dans lequel ladite enveloppe de matériau souple a une forme principalement tubulaire cylindrique et est disposée entre un organe tubulaire interne parcouru par le flux d'eau et une paroi cylindrique externe, ladite poche d'air étant définie d'un côté de ladite enveloppe, et ledit espace dérivé étant défini de l'autre côté de ladite enveloppe, est caractérisé en ce que ladite enveloppe de matériau souple co-opère, pour renfermer ladite poche d'air, avec ledit organe tubulaire interne, sur lequel l'enveloppe est insérée.

De préférence, ladite enveloppe de matériau souple a une forme semi-toroïdale. Aussi, de préférence, ledit organe tubulaire interne s'étend sur une longueur quelque peu plus réduite que celle de ladite paroi cylindrique externe, ainsi réalisant à son extrémité un passage de communication entre l'espace interne audit organe tubulaire, qui est parcouru par le flux d'eau, et l'espace compris entre ledit organe tubulaire interne et ladite paroi externe, incluant ledit espace dérivé non parcouru par le flux.

Encore, de préférence, ledit organe tubulaire interne est une partie d'un organe de l'installation hydraulique, telle qu'un tuyau rigide d'alimentation ou une partie d'un raccord, parcouru par le flux, ou bien ledit organe tubulaire interne est un organe fabriqué séparément et appliqué à un organe de l'installation hydraulique, parcouru par le flux.

Conformément à un deuxième ensemble de solutions suivant l'invention, un dispositif destiné à amortir les vibrations et le bruit produits dans une installation hydraulique, du type comprenant au moins une enveloppe de matériau souple qui renferme une poche d'air et qui est disposée en contact avec l'eau de l'installation hydraulique, dans lequel ladite enveloppe est disposée dans un espace dérivé, lequel communique avec les espaces parcourus par le flux d'eau, mais n'est pas parcouru lui-même en mesure appréciable par ce flux, et dans lequel ladite enveloppe de matériau souple a substantiellement une forme en capsule, avec une paroi mince ayant fonction de membrane, et une paroi périphérique, est caractérisé en ce que ladite enveloppe en forme de capsule est disposée dans un espace dérivé de côté à un passage formé dans un organe intermédiaire destiné à être interposé entre le fond d'un corps de robinet et le fond d'une cartouche; ou bien elle est disposée dans un espace dérivé de côté à un passage formé dans le fond d'une cartouche; ou encore elle est disposée dans un espace dérivé de côté à un passage de la plaque fixe d'une cartouche.

Dans le but de mieux faire comprendre les caractéristiques, les buts et les avantages de l'objet de l'invention, certains modes de réalisation sont décrits ci de suite, au titre d'exemples nullement limitatifs, en faisant référence aux dessins annexés, dans lesquels:
Fig. 1 montre la section d'un corps de robinet à cartouche avec des tuyaux rigides d'alimentation incorporant le dispositif amortisseur suivant un premier mode de réalisation de l'invention, avec la cartouche montrée pour la plupart en vue extérieure, seulement sectionnée en partie au fond;
Fig. 2 montre le dispositif amortisseur suivant l'invention incorporé dans un organe de raccordement pour une installation hydraulique;
Figs. 3 et 4 montrent des autres modes de réalisation d'un organe de raccordement incorporant le dispositif amortisseur suivant l'invention;
Fig. 5 montre en vue de dessous un organe intermédiaire incorporant deux dispositifs amortisseurs suivant l'invention;
Fig. 6 montre, en section suivant la ligne VI-VI de la figure 5, l'organe intermédiaire de cette figure, inséré entre le fond d'un corps de robinet et la cartouche correspondante;
Fig. 7 montre, singulièrement et en section, une enveloppe en capsule utilisée dans des différents modes de réalisation de l'invention;
Fig.8 montre un dispositif similaire de celui suivant la figure 6, installé dans le fond d'une cartouche; et
Fig. 9 montre un dispositif lui-aussi similaire de celui suivant la figure 6, installé dans une plaque fixe de contrôle du flux.

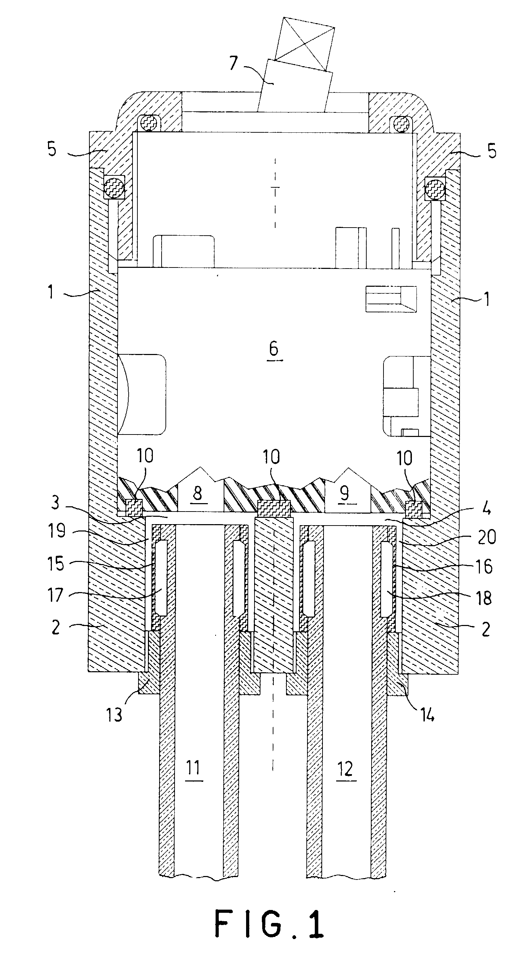

Faisant d'abord référence à la figure 1, on a illustré en section un corps de robinet 1, comportant un fond inférieur 2 avec des ouvertures 3 et 4 pour l'entrée de l'eau chaude et de l'eau froide, et fermé supérieurement par un couvercle 5 qui maintient en position dans l'intérieur du corps 1 une cartouche 6, pourvue d'un levier de commande 7. La cartouche 6 comporte des mécanismes qui, sous le contrôle du levier 7, actionné par l'usager, règlent le rapport de mélange entre l'eau chaude et l'eau froide, ainsi que la quantité d'eau mélangée délivrée. Ces mécanismes peuvent être de tout genre connu en soi, et de ce fait ils ne sont ni décrits ni représentés. De la cartouche 6, montrée en vue extérieure, on a indiqué en section seulement les entrées 8 et 9 pour l'eau chaude et froide. La cartouche comporte en outre un passage de débit, non représenté, et elle est installée dans le corps 1 du robinet avec des joints 10 appropriés, qui établissent l'étanchéité par rapport au fond 2.

Le robinet représenté dans la figure 1 est du type alimenté par des tuyaux rigides 11 et 12 se terminant dans le fond 2. Dans le mode de réalisation représenté, des dispositifs d'amortissement suivant l'invention sont partiellement associés aux tuyaux d'alimentation 11 et 12 eux-mêmes. Ces tuyaux sont dimensionnés de sort à s'étendre jusque voisin de l'extrémité supérieure des ouvertures 3 et 4 du fond 2, et ils sont pourvus de douilles filetées, respectivement 13 et 14, pour leur connection au fond 2. Sur les extrémités des tuyaux 11 et 12, qui arrivent jusqu'au-delà des douilles 13 et 14 dans l'intérieur des ouvertures 3 et 4, sont insérées des enveloppes, respectivement 15 et 16, en matériau souple, de préférence élastomérique, lesquelles renferment entre leur propres parois et les parois des tuyaux 11 et 12 des poches d'air, respectivement 17 et 18. Ces enveloppes 15 et 16 ont un diamètre extérieur plus réduit (bien que seulement un peu) que le diamètre des ouvertures 3 et 4, de sorte qu'elles définissent des espaces, respectivement 19 et 20, entourant les enveloppes 15 et 16.

Comme on le comprend par l'observation de la figure 1, les flux d'eau parcourant les tuyaux d'alimentation 11 et 12 passent seulement dans une courte portion terminale des ouvertures d'entrée 3 et 4, et ils sont dirigés, plus ou moins directement, vers les entrées 8 et 9 de la cartouche. Dans le cas représenté, ces entrées 8 et 9 sont coaxiales des tuyaux d'alimentation 11 et 12, mais il est évident que la situation décrite ci-dessus demeure substantiellement inchangée même si les entrées 8 et 9 de la cartouche sont déplacées par rapport aux tuyaux d'alimentation 11 et 12. Les flux d'eau ne passent pas dans les espaces 19 et 20, qui sont dérivés par rapport à la trajectoire des flux. Partant les flux d'eau ne lèchent pas les enveloppes 15 et 16, qui peuvent être très minces du fait qu'elles ne subissent aucune action directe de la part des flux d'eau. Les vibrations produites dans l'installation, qui se traduisent en des variations périodiques de pression de l'eau, sont transmises de l'eau contenue dans les tuyaux 11 et 12, à travers la partie supérieure des ouvertures d'entrée 3 et 4, aux espaces dérivés 19 et 20, dans lesquels, à travers les minces enveloppes 15 et 16, exercent leur action les poches d'air 17 et 18. De ce fait, les variations périodiques de pression sont amorties d'une façon efficace dans les espaces dérivés 19 et 20, et cet effet d'amortissement est transmis, à travers l'eau substantiellement incompressible, à la masse d'eau prenant partie au flux qu'on veut amortir. De cette façon on peut atteindre un amortissement très efficace, en même temps protégeant d'une façon totale les minces enveloppes 15 et 16.

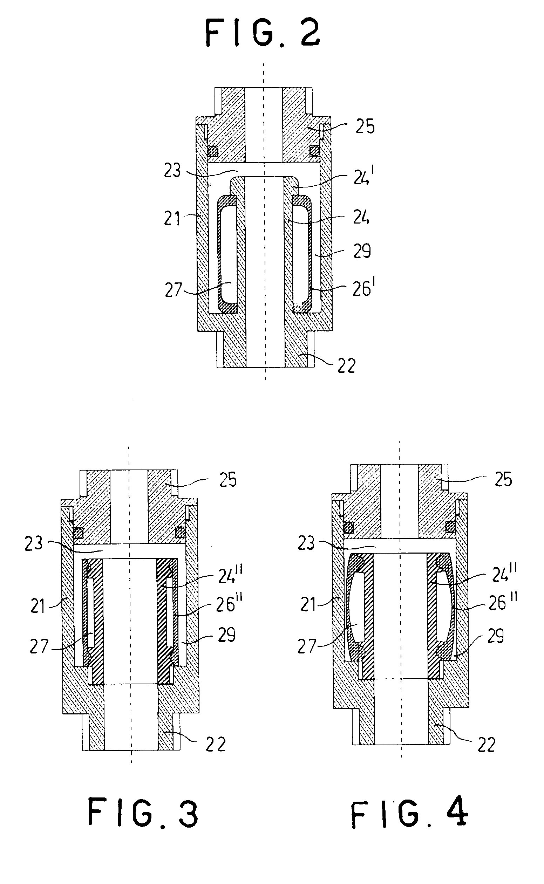

Des disposition similaires de celle qu'on a décrit sont représentées dans les figures 2 à 4, faisant référence à un organe de raccordement qui peut être inséré entre toutes parties d'une installation hydraulique. Toutefois l'homme de métier va comprendre sans difficulté que les dispositions suivant ces figures peuvent être adoptées même en un dispositif suivant la figure 1.

Dans la figure 2, un organe de raccordement comporte un corps creux 21 avec un fond 22 fileté pour être raccordé à une partie de l'installation hydraulique, et avec un couvercle 25 à son tour fileté pour être raccordé à une autre partie de l'installation hydraulique; le flux de l'installation parcourt donc le raccord 21-25. Dans l'intérieur du raccord est délimitée une chambre 23 traversée jusque presqu'à son extrémité par un tronçon de tube 24 solidaire du fond 22. Autour du tronçon de tube 24 est insérée une enveloppe 26, qui dans ce cas a une forme semi-toroïdale. L'espace 29 entourant le tronçon de tube 24 et l'enveloppe 26, dans lequel a lieu l'effet d'amortissement dû à la poche d'air 27, communique avec l'espace interne du tronçon de tube 24, qui est parcouru par le flux d'eau, mais il est dérivé par rapport à lui et il n'est pas parcouru par le flux; de ce fait le flux ne lèche pas l'enveloppe 26. Comme on le comprend, ce dispositif agit, pour amortir les vibrations et. le bruit, d'une façon identique à celle décrite par rapport à la figure 1. Le raccord peut être inséré entre toutes parties d'une installation hydraulique, et, bien entendu, les moyens qu'il comporte pour sa connection pourraient être différents des filetages représentés pour le fond 22 et pour le couvercle 25. On doit remarquer que le flux d'eau peut parcourir le raccord, indifféremment, dans le sens qui suivant la figure va du bas vers le haut, ou bien dans le sens opposé.

Dans la figure 2, l'enveloppe 26' a une forme semi-toroïdale avec une section en C, et elle renferme la poche d'air 27 entre sa propre surface et le tronçon de tube 24. Ce dernier comporte de préférence, près de son extrémité, un élargissement, 24' pour retenir en position l'enveloppe 26'.

Les figures 3 et 4 montrent des raccords similaires de celui suivant la figure 2, mais dans lesquels le tronçon de tube 24" est réalisé séparément et appliqué au fond 22, au lieu d'être réalisé en une seule pièce avec le fond lui-même. Cela rend plus facile l'usinage du tronçon de tube 24" et, particulièrement, permet de réaliser dans celui-ci des sièges creusés dans lesquels engagent les bords élargis, supérieur et inférieur, de l'enveloppe 26". Le fonctionnement demeure identique au fonctionnement du dispositif suivant la figure 2.

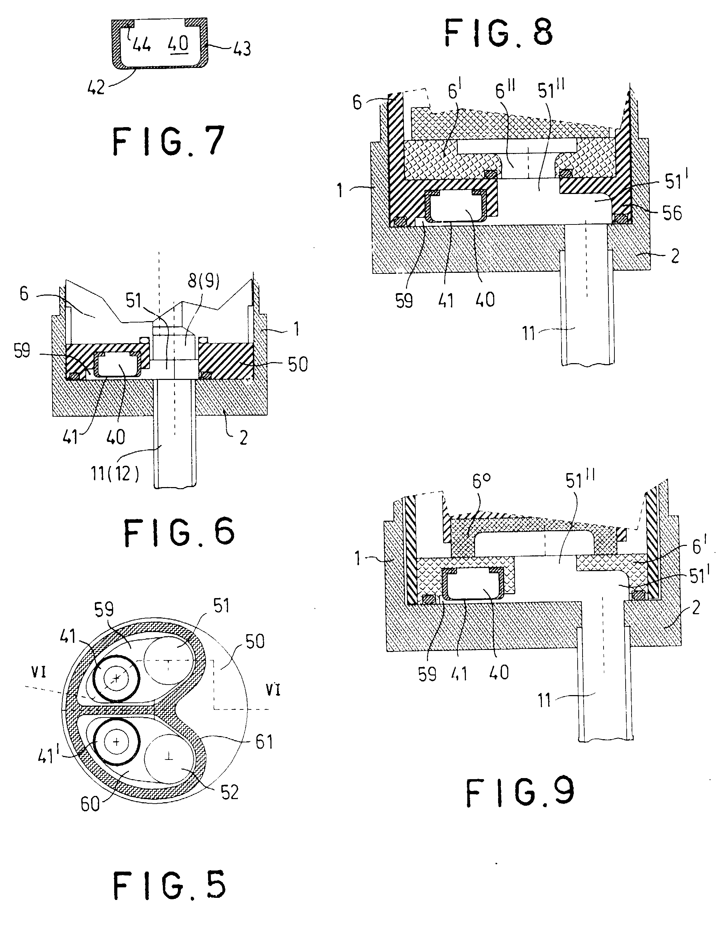

La figure 7 montre un mode de réalisation dans lequel l'enveloppe, indiquée dans son ensemble par le numéro 41, peut avoir avec avantage une structure en capsule montrée en section, avec une partie mince 42 constituant une membrane (qui est la partie active aux effets de l'amortissement), une paroi périphérique de support 43 (qui peut avoir toute épaisseur adéquate) et un bord 44 dirigé vers l'intérieur. La paroi périphérique 43 assure l'étanchéite d'une telle enveloppe, installée dans un siège creux correspondant, tandis que le bord 44 assure le maintien et aussi l'augmentation de l'étanchéité lorsque la partie mince 42 formant membrane est déformée par l'action de la pression de l'eau.

Les figures 5 et 6 montrent un organe intermédiaire destiné à être interposé entre le fond 2 d'un corps 1 de robinet et le fond d'une cartouche 6, pour amortir les vibrations et le bruit produits par le robinet. L'organe intermédiaire 50 comporte des passages 51 et 52 qui correspondent aux tubations d'alimentation 11 et 12 se terminant dans le fond 2 du corps 1 du robinet, ainsi qu'aux passages d'entrée 8 et 9 de la cartouche 6, et ces passages 51 et 52 communiquent avec des espaces dérivés 59 et 60 dans lesquels sont installées des enveloppes en capsule 41 et 41' similaires de celles suivant la figure 7. Un joint 61, conformé d'une façon appropriée, délimite et sépare les espaces 51, 59 et 52, 60. Comme on le comprend de l'observation de la figure 6, chaque enveloppe en capsule 41, 41' exécute un amortissement dans l'espace dérivé 59, 60, respectivement, et donc dans la tubation 11, 12 avec laquelle ledit espace dérivé communique. Le fonctionnement est encore identique au fonctionnement expliqué à propos de la figure 1, malgré la grande différence dans le mode de réalisation. On remarque que la disposition des espaces dérivés 59 et 60 à côté des passages 52 et 52 autorise l'installation des dispositifs amortisseurs sans demander aucune appréciable augmentation de la longueur du corps 1 du robinet, permettant ainsi l'installation des dispositifs amortisseurs qui, suivant la technique connue, ne serait pas possible, comme déjà dit dans le préambule.

On remarque encore que l'organe intermédiaire 50 peut être utilisé pour connecter entre elles des conduites d'alimentations 11 et 12 et des entrées 8 et 9 de la cartouche, qui ne font pas face entre elles; en effet, il n'y a pas de difficultés pour réaliser l'organe intermédiaire 50 de sorte à connecter entr'eux des passages déplacés l'un par rapport à l'autre.

La figure 8 montre comme la disposition suivant la figure 6 peut être réalisée aussi dans le fond 56 lui-même de la cartouche 6. Ce fond comporte, pour chaque voie de flux (c'est à dire, soit pour l'eau chaude, soit pour l'eau froide) un passage 51' qui correspond à une tubation d'alimentation 11, et un passage 51" qui correspond à un passage 6" de la plaque fixe 6' de la cartouche 6; ces passages 51' et 51" communiquent entr'eux et avec l'espace dérivé 59 dans lequel se trouve l'enveloppe en capsule 41 renfermant la poche d'air 40. Le fonctionnement demeure identique au fonctionnement déjà expliqué. De plus, cette figure donne un exemple concret de ce qu'on a dit à propos des figures 5 et 6 au sujet de la possibilité de connecter entre elles des conduites d'alimentation et des entrées de la cartouche (dans ce cas, les passages de la plaque fixe de la cartouche) qui ne sont pas en ligne.

Enfin, la figure 9 montre comme la disposition suivant la figure 6 peut être réalisée même dans la plaque fixe 6', elle-même, de la cartouche 6. Dans ce cas les parties qui suivant la figure 8 étaient réalisées ou installées dans le fond 56 de la cartouche 6 sont maintenant réalisées ou installées dans la plaque fixe 6' de la cartouche. Le passage 51" forme alors l'un des passages présentés par la plaque fixe 6', lesquels co-opèrent avec la plaque mobile 6° de la cartouche 6.

Dans les exemples suivant les figures 5 à 9, l'enveloppe en capsule qui renferme la poche d'air a été montrée comme insérée dans un siège creux correspondant. Toutefois on doit comprendre que cette enveloppe en capsule pourrait aussi être montée d'une façon différente sur un support, par exemple par collage, soudure ou en l'insérant comme capuchon sur un support ou un collet de connection. De plus, l'enveloppe en capsule peut être réalisée aussi en forme fermée, et dans ce cas elle renferme une poche d'air sans pour cela co-opérer avec aucune autre partie.

On a dit que l'enveloppe renfermant la poche d'air doit être faite d'un matériau souple: celle-ci est la caractéristique essentielle que le matériau doit montrer. Il est toutefois préférable que ledit matériau soit aussi élastique et, plus en particulier, qu'il s'agit d'un matériau élastomérique.

Les exemples qu'on a décrit et illustré montrent avec évidence comme l'invention peut être réalisée en plusieurs modes de réalisation, même très différents l'un de l'autre. Bien entendu, aussi d'autres modes de réalisation peuvent être choisis dans le projet, pourvu que chaque enveloppe renfermant une poche d'air doit être installée dans un espace dérivé, qui communique avec les espaces parcourus par le flux mais à son tour n'est pas parcouru par le flux, de sorte que l'enveloppe n'est pas léchée par un flux appréciable. Ainsi, l'espace dérivé dans lequel est installée une enveloppe renfermant une poche d'air destinée à effectuer l'amortissement peut être réalisé soit dans une partie quelconque d'un robinet ou d'une cartouche pour robinet, soit dans un raccord ou dans un tronçon de canalisation, soit encore, en général, dans toute partie d'une installation hydraulique, laquelle se trouve en communication avec les espaces parcourus par le flux, dans lesquels on veut amortir les vibrations et le bruit.

Des différentes modifications et tout remplacement d'équivalents techniques peuvent être portés à ce qu'on a décrit et schématiquement illustré à titre d'exemples, sans pour cela se départir du cadre de l'invention tel qu'il est précisé par les revendications.

## Revendications

1. Dispositif destiné à amortir les vibrations et le bruit produits dans une installation hydraulique, du type comprenant au moins une enveloppe (15,16,26,41) de matériau souple qui renferme une poche d'air (17,18,27,40) et qui est disposée en contact avec l'eau de l'installation hydraulique, dans lequel ladite enveloppe (15,16,26,41) est disposée dans un espace dérivé (19,20,29,45,59), lequel communique avec les espaces (3,4,23,35,51) parcourus par le flux d'eau, mais n'est pas parcouru lui-même en mesure appréciable par ce flux, et dans lequel ladite enveloppe (15,16,26) de matériau souple a une forme principalement tubulaire cylindrique et est disposée entre un organe tubulaire interne (11,12,24,34) parcouru par le flux d'eau et une paroi cylindrique externe (2,21,31), ladite poche d'air (17,18,27) étant définie d'un côté de ladite enveloppe, et ledit espace dérivé (19,20,29) étant défini de l'autre côté de ladite enveloppe,
caractérisé en ce que ladite enveloppe (15,16,26) de matériau souple co-opère, pour renfermer ladite poche d'air (17,18,27), avec ledit organe tubulaire interne (11, 12,24), sur lequel l'enveloppe est insérée.

2. Dispositif suivant la revendication 1, caractérisé en ce que ladite enveloppe (26) de matériau souple a une forme semi-toroïdale.

3. Dispositif suivant la revendication 1, caractérisé en ce que ledit organe tubulaire interne (11,12,24) s'étend sur une longueur quelque peu plus réduite que celle de ladite paroi cylindrique externe (2,21), ainsi réalisant à son extrémité un passage de communication (3,4,23) entre l'espace interne audit organe tubulaire, qui est parcouru par le flux d'eau, et l'espace compris entre ledit organe tubulaire interne et ladite paroi externe, incluant ledit espace dérivé (19,20,29) non parcouru par le flux.

4. Dispositif suivant la revendication 3, caractérisé en ce que ledit organe tubulaire interne est une partie d'un organe de l'installation hydraulique, telle qu'un tuyau rigide d'alimentation (11,12) ou une partie d'un raccord (21), parcouru par le flux.

5. Dispositif suivant la revendication 3, caractérisé en ce que ledit organe tubulaire interne (24") est un organe fabriqué séparément et appliqué à un organe (21) de l'installation hydraulique, parcouru par le flux.

6. Dispositif destiné à amortir les vibrations et le bruit produits dans une installation hydraulique, du type comprenant au moins une enveloppe (15,16,26,41) de matériau souple qui renferme une poche d'air (17,18,27,40) et qui est disposée en contact avec l'eau de l'installation hydraulique, dans lequel ladite enveloppe (15,16,26,41) est disposée dans un espace dérivé (19,20,29,45,59), lequel communique avec les espaces (3,4,23,35,51) parcourus par le flux d'eau, mais n'est pas parcouru lui-même en mesure appréciable par ce flux, et dans lequel ladite enveloppe (41) de matériau souple a substantiellement une forme en capsule, avec une paroi mince (42) ayant fonction de membrane, et une paroi périphérique (43), caractérisé en ce que ladite enveloppe (41) en forme de capsule est disposée dans un espace dérivé (59) de côté à un passage (51) formé dans un organe intermédiaire destiné à être interposé entre le fond (2) d'un corps (1) de robinet et le fond d'une cartouche (6) dudit robinet.

7. Dispositif destiné à amortir les vibrations et le bruit produits dans une installation hydraulique, du type comprenant au moins une enveloppe (15,16,26,41) de matériau souple qui renferme une poche d'air (17,18,27,40) et qui est disposée en contact avec l'eau de l'installation hydraulique, dans lequel ladite enveloppe (15,16,26,41) est disposée dans un espace dérivé (19,20,29,45,59), lequel communique avec les espaces (3,4,23,35,51) parcourus par le flux d'eau, mais n'est pas parcouru lui-même en mesure appréciable par ce flux, et dans lequel ladite enveloppe (41) de matériau souple a substantiellement une forme en capsule, avec une paroi mince (42) ayant fonction de membrane, et une paroi périphérique (43), caractérisé en ce que ladite enveloppe (41) en forme de capsule est disposée dans un espace dérivé (59) de côté à un passage (51') formé dans le fond d'une cartouche (6) de robinet.

8. Dispositif destiné à amortir les vibrations et le bruit produits dans une installation hydraulique, du type comprenant au moins une enveloppe (15,16,26,41) de matériau souple qui renferme une poche d'air (17,18,27,40) et qui est disposée en contact avec l'eau de l'installation hydraulique, dans lequel ladite enveloppe (15,16,26,41) est disposée dans un espace dérivé (19,20,29,45,59), lequel communique avec les espaces (3,4,23,35,51) parcourus par le flux d'eau, mais n'est pas parcouru lui-même en mesure appréciable par ce flux, et dans lequel ladite enveloppe (41) de matériau souple a substantiellement une forme en capsule, avec une paroi mince (42) ayant fonction de membrane, et une paroi périphérique (43), caractérisé en ce que ladite enveloppe (41) en forme de capsule est disposée dans un espace dérivé (59) de côté à un passage (51') de la plaque fixe (6') d'une cartouche (6) de robinet.

## Patentansprüche

1. Vorrichtung zur Dämpfung der in einer Hydraulikanlage entstehenden Schwingungen und Geräusche, mit wenigstens einem Gehäuse (15,16,26,41) aus verformbarem Material, das eine Lufttasche (17,18,27,40) umschliesst und mit dem Wasser der Hydraulikanlage in Berührung steht, wobei das Gehäuse (15,16,26,41) in einem Nebenraum (19,20,29,45,59) der Vorrichtung angeordnet ist, der mit den vom Wasser durchströmten Räumen (3,4,23,35,51) in Verbindung steht, aber selbst nur in vernachlässigbarem Mass vom Wasser durchströmt ist, und wobei das Gehäuse (15,16,26) aus verformbarem Material im wesentlichen die Form eines Zylinderrohres aufweist und zwischen einem vom Wasser durchströmten rohrförmigen Innenelement (11,12,24,34) und einer zylinderförmigen Aussenwand (2,21,31) angeordnet ist, wobei die Lufttasche (17,18,27) durch eine Seite des Gehäuses und der Nebenraum (19,20,29) durch die andere Seite des Gehäuses gebildet ist, dadurch gekennzeichnet, dass das Gehäuse (15,16,26) aus verformbarem Material mit dem rohrförmigen Innenelement (11,12,24), auf dem das Gehäuse aufgesetzt ist, in Wirkverbindung steht, um die Lufttasche (17, 18,27) abzugrenzen.

2. Vorrichtung nach Anspruch 1, dadurch gekennzeichnet, dass das Gehäuse (26) aus verformbarem Material halbwulstförmig ist.

3. Vorrichtung nach Anspruch 1, dadurch gekennzeichnet, dass sich das rohrförmige Innenelement (11,12,24) über eine Länge erstreckt, die ziemlich kleiner als die Länge der zylinderförmigen Aussenwand (2, 21) ist, wobei an seinem Ende ein Durchlass (3,4,23) entsteht, der den vom Wasser durchströmten Innenraum des rohrfömigen Elements mit dem Raum in Verbindung setzt, der sich zwischen dem rohrförmigen Innenelement und der Aussenwand befindet und auch den vom Wasser nicht durchströmten Nebenraum (19,20,29) einschliesst.

4. Vorrichtung nach Anspruch 3, dadurch gekennzeichnet, dass das rohrförmige Innenelement zu einem vom Wasser durchströmten Teil der Hydraulikanlage gehört, wie etwa einer steifen Zuleitung (11,12) oder einem Teil eines Anschlusstückes (21).

5. Vorrichtung nach Anspruch 3, dadurch gekennzeichnet, dass das rohrförmige Innenelement (24") ein konstruktiv getrenntes Element ist, das an einem vom Wasser durchströmten Element (21) der Hydraulikanlage angebracht ist.

6. Vorrichtung zur Dämpfung der in einer Hydraulikanlage entstehenden Schwingungen und Geräusche, mit wenigstens einem Gehäuse (15,16,26,41) aus verformbarem Material, das eine Lufttasche (17,18,27,40) umschliesst und mit dem Wasser der Hydraulikanlage in Berührung steht, wobei das Gehäuse (15,16,26,41) in einem Nebenraum (19,20,29,45,59) der Vorrichtung angeordnet ist, der mit den vom Wasser durchströmten Räumen (3,4,23,35,51) in Verbindung steht, aber selbst nur in vernachlässigbarem Mass vom Wasser durchströmt ist, und wobei das Gehäuse (41) aus verformbarem Material im wesentlichen die Form einer Kapsel mit einer dünnen, als Membrane dienenden Wand (42) und einer Umfangswand (43) aufweist, dadurch gekennzeichnet, dass das kapselförmige Gehäuse (41) in einem Nebenraum (59) an der Seite eines Durchlasses (51) angeordnet ist, der in einem Zwischenelement gebildet ist, das zwischen dem Boden (2) des Körpers (1) eines Wasserhahnes und der Bodenscheibe einer Patrone (6) dieses Wasserhahnes angeordnet werden soll.

7. Vorrichtung zur Dämpfung der in einer Hydraulikanlage entstehenden Schwingungen und Geräusche, mit wenigstens einem Gehäuse (15,16,26,41) aus verformbarem Material, das eine Lufttasche (17,18,27,40) umschliesst und mit dem Wasser der Hydraulikanlage in Berührung steht, wobei das Gehäuse (15,16,26,41) in einem Nebenraum (19,20,29,45,59) der Vorrichtung angeordnet ist, der mit den vom Wasser durchströmten Räumen (3,4,23,35,51) in Verbindung steht, aber selbst nur in vernachlässigbarem Mass vom Wasser durchströmt ist, und wobei das Gehäuse (41) aus verformbarem Material im wesentlichen die Form einer Kapsel mit einer dünnen, als Membrane dienenden Wand (42) und einer Umfangswand (43) aufweist, dadurch gekennzeichnet, dass das kapselförmige Gehäuse (41) in einem Nebenraum (59) an der Seite eines Durchlasses (51') angeordnet ist, der in der Bodenscheibe einer Patrone (6) eines Wasserhahnes angeformt ist.

8. Vorrichtung zur Dämpfung der in einer Hydraulikanlage entstehenden Schwingungen und Geräusche, mit wenigstens einem Gehäuse (15,16,26,41) aus verformbarem Material, das eine Lufttasche (17,18,27,40) umschliesst und mit dem Wasser der Hydraulikanlage in Berührung steht, wobei das Gehäuse (15,16,26,41) in einem Nebenraum (19,20,29,45,59) der Vorrichtung angeordnet ist, der mit den vom Wasser durchströmten Raumen (3,4,23,35,51) in Verbindung steht, aber selbst nur in vernachlässigbarem Mass vom Wasser durchströmt ist, und wobei das Gehäuse (41) aus verformbarem Material im wesentlichen die Form einer Kapsel mit einer dünnen, als Membrane dienenden Wand (42) und einer Umfangswand (43) aufweist, dadurch gekennzeichnet, dass das kapselförmige Gehäuse (41) in einem Nebenraum (59) an der Seite eines Durchlasses (51') der festen Platte (6') einer Patrone (6) eines Wasserhahnes angeordnet ist.

## Claims

1. A device intended to dampen the vibration and the noise produced in a hydraulic installation, of the type including at least an envelope (15,16, 26,41) of a flexible material which defines an air pocket (17,18,27,40) and contacts the water of the hydraulic installation, wherein said envelope (15,16, 26,41) is located in a derived space (19,20,29,45,59), which communicates with the spaces (3,4,23,35,51) across which runs the water flow, but wherein no noticeable part of the flow runs, and wherein said envelope (15,16,26) of a flexible material has a tubular cylindrical main shape and is situated between an inner tubular member (11,12,24,34) across which runs the water flow and an outer cylindrical wall (2,21,31), said air pocket (17,18,27) being defined on one side by said envelope, and said derived space (19,20,29) being defined on the opposite side of said envelope, characterized in that said envelope (15,16,26) of a flexible material co-operates, in enclosing said air pocket (17,18,27), with said inner tubular member (11,12,24) on which the envelope is mounted.

2. A device as set forth in Claim 1, characterized in that said envelope (26) of a flexible material has a semitoroidal shape.

3. A device as set forth in Claim 1, characterized in that said inner tubular member (11,12,24) extends on a length somewhat lesser than that of said outer cylindrical wall (2,21), thus creating at its own end a communication passage (3,4,23) between the inner space of said tubular member, across which runs the water flow, and the space located between said inner tubular member and said outer wall which contains said derived space (19,20,29) across which the flow does not run.

4. A device as set forth in Claim 3, characterized in that said inner tubular member is a part of a member of the hydraulic plant, such as a stiff supply pipe (11,12) or a part of a connection (21), across which runs the flow.

5. A device as set forth in Claim 3, characterized in that said inner tubular member (24") is a constructively separate member, applied to a member (21) of the hydraulic plant across which runs the flow.

6. A device intended to dampen the vibration and the noise produced in a hydraulic installation, of the type including at least an envelope (15,16, 26,41) of a flexible material which defines an air pocket (17,18,27,40) and contacts the water of the hydraulic installation, wherein said envelope (15,16, 26,41) is located in a derived space (19,20,29,45,59), which communicates with the spaces (3,4,23,35,51) across which runs the water flow, but wherein no noticeable part of the flow runs, and wherein said envelope (41) of a flexible material substantially has the shape of a capsule, with a thin wall (42) acting as a membrane, and a peripheral wall (43), characterized in that said envelope (41) in the shape of a capsule is located in a derived space (59) aside a passage (51) formed in an intermediate member intended to be interposed between the bottom (2) of a tap body (1) and the bottom of a cartridge (6) provided for said tap.

7. A device intended to dampen the vibration and the noise produced in a hydraulic installation, of the type including at least an envelope (15,16, 26,41) of a flexible material which defines an air pocket (17,18,27,40) and contacts the water of the hydraulic installation, wherein said envelope (15,16, 26,41) is located in a derived space (19,20,29,45,59), which communicates with the spaces (3,4,23,35,51) across which runs the water flow, but wherein no noticeable part of the flow runs, and wherein said envelope (41) of a flexible material substantially has the shape of a capsule, with a thin wall (42) acting as a membrane, and a peripheral wall (43), characterized in that said envelope (41) in the shape of a capsule is located in a derived space (59) aside a passage (51') formed in the bottom of a tap cartridge (6).

8. A device intended to dampen the vibration and the noise produced in a hydraulic installation, of the type including at least an envelope (15,16, 26,41) of a flexible material which defines an air pocket (17,18,27,40) and contacts the water of the hydraulic installation, wherein said envelope (15,16, 26,41) is located in a derived space (19,20,29,45,59), which communicates with the spaces (3,4,23,35,51) across which runs the water flow, but wherein no noticeable part of the flow runs, and wherein said envelope (41) of a flexible material substantially has the shape of a capsule, with a thin wall (42) acting as a membrane, and a peripheral wall (43), characterized in that said envelope (41) in the shape of a capsule is located in a derived space (59) aside a passage (51') of the fixed plate (6') of a tap cartridge (6).
